# EUROPEAN PATENT APPLICATION

(11) **EP 2 889 276 A1**
(43) Date of publication of application: **01.07.2015**
(21) Application number: 13831637.7
(22) Date of filing: 21.08.2013
(51) Int. Cl.: C03C 3/087, C03B 27/04

(54) **REINFORCED GLASS**

(30) Priority: 24.08.2012 JP 2012185685
(71) Applicant: Asahi Glass Company, Limited, Tokyo 100-8405 (JP)
(72) Inventor: AMMA, Shinichi, Tokyo 100-8405 (JP); ONO, Madoka, Tokyo 100-8405 (JP); KOIKE, Akio, Tokyo 100-8405 (JP); KATO, Yasumasa, Tokyo 100-8405 (JP); AKADA, Shuichi, Tokyo 100-8405 (JP); KONDO, Yuki, Tokyo 100-8405 (JP)
(74) Representative: Müller-Boré & Partner Patentanwälte PartG mbB
(86) International application number: PCT/JP2013/072330
(87) International publication number: WO 2014/030682

(57) **Abstract**

To provide tempered glass which is thin and can be produced by common air-quench tempering without requiring a special production facility, and untreated glass for such tempered glass.

The tempered glass is obtainable via a heating step and a cooling step. The heating step is a step of applying heat treatment to glass to be treated, of which the glass transition point is from 500 to 600°C and the maximum value of the thermal expansion coefficient (αmax) between the glass transition point and the yield point is at least 430×10⁻⁷/°C. The cooling step is a step of applying air-quenching treatment to the glass to be treated.

## Description

### TECHNICAL FIELD

The present invention relates to tempered glass and glass to be treated for tempering, particularly to thin tempered glass.

### BACKGROUND ART

Tempered glass is one having overcome such a drawback that common glass is susceptible to breakage, and it is thus used for transportation equipment, architecture, etc. As the transportation equipment, cars, trucks, buses, railways, ships, aircrafts, etc. may be mentioned, and tempered glass is used for e.g. windows, headlights, taillights, etc. Whereas, as the architecture, buildings, houses, etc. may be mentioned, and tempered glass is used for e.g. windows, doors, partitions, etc. Further, tempered glass is widely used for furniture such as bookshelves, showcases, etc., electrical appliances such as kitchen utensils, etc., office equipment and supplies, etc.

Tempered glass is produced, for example, by a method so called thermal tempering. Thermal tempering is one utilizing heat shrinkage of glass when quenched, and is carried out by heating glass to a temperature in the vicinity of its softening point or yield point, followed by quenching. At that time, since the temperature decrease at the surface is faster than the temperature decrease at the interior, a temperature difference occurs in the thickness direction to form a tensile stress at the surface and a compressive stress at the interior, and by subsequent reversion due to a stress relaxation phenomenon, a compression stress at the surface and a tensile stress at the interior will be formed and remain. Since a compressive stress remains at the surface, the strength is improved, and scratch development is prevented so that the abrasion resistance be improved. As such thermal tempering, air-quench tempering may be mentioned as a typical one, wherein sheet glass is produced by e.g. a float process, a cut glass sheet is heated to a temperature in the vicinity of its softening point or yield point, and then, as a cooling medium, air is blown to the surface for quenching.

In recent years, weight reduction of tempered glass is demanded for transportation equipment, architecture, etc. Weight reduction of tempered glass can be accomplished by reducing the thickness to be thin, and it is required to reduce the thickness to be at most 2.5 mm. However, in thermal tempering, a temperature difference between the surface and the interior during quenching is utilized, and if the thickness is thin, it becomes difficult to make the temperature difference between the surface and the interior to be sufficiently large and to accomplish essential tempering.

As a method for producing thin tempered glass, it is, for example, known to use a glass composition which has a predetermined glass composition and which, at the same time, has an average linear thermal expansion coefficient of from 80 to 110×10⁻⁷/°C at from 50 to 350°C (see e.g. Patent Document 1). However, according to such a production method, only the average linear thermal expansion coefficient on the lower temperature side is controlled, whereby it is not necessarily capable of effectively inducing a residual stress to thin glass having a thickness of at most 2.5 mm.

Further, as a method for producing thin tempered glass, a method of carrying out a two-step cooling is, for example, known, wherein air to generate shock waves with a predetermined heat transfer coefficient is blown and then, air with a predetermined heat transfer coefficient is further blown (see e.g. Patent Document 2). However, according to such a production method, it is required to provide an additional mechanism such as a mechanism to open and adjust the pressure to a usual piping in order to generate shock waves, whereby the production cost increases substantially as compared with usual production facilities.

### PRIOR ART DOCUMENTS

### PATENT DOCUMENTS

Patent Document 1: JP-A-2003-119048
Patent Document 2: JP-B-6-23068

### DISCLOSURE OF INVENTION

### TECHNICAL PROBLEMS

As mentioned above, with respect to tempered glass, thickness reduction is required from the viewpoint of weight reduction. Further, from the viewpoint of the production cost, it is desired to be produced without substantially changing conventional production facilities. For example, in air-quench tempering, by blowing air to generate shock waves or by increasing the wind pressure of air to be blown, it becomes easy to induce a residual stress even to thin glass, but it is required to change the production facilities, etc. and thus, the production cost tends to increase.

The present invention has been made to solve such problems, and it is an object of the present invention to provide tempered glass which is thin and can be produced by common air-quench tempering without requiring a special production facility, and glass to be treated for tempering, which is suitable for the production of such tempered glass.

### SOLUTION TO PROBLEMS

The tempered glass of the present invention is obtainable via a heating step of applying heat treatment to glass to be treated, of which the glass transition point is from 500 to 600°C and the maximum value of the thermal expansion coefficient (αmax) between the glass transition point and the yield point is at least 430×10⁻⁷/°C, and a cooling step of applying air-quenching treatment to the glass to be treated.

Further, the glass to be treated of the present invention comprises, as represented by mol percentage based on oxides, from 55 to 75% of SiO₂, from 0 to 3% of Al₂O₃, from 0.1 to 25% of MgO, from 0.1 to 15% of CaO, from 0 to 10% of SrO, from 0 to 3% of BaO, from 8 to 20% of Na₂O, from 0 to 4% of K₂O, from 0.1 to 2% of Fe₂O₃ and from 0 to 5% of TiO₂, provided that the sum of the SiO₂ content and a value obtained by multiplying the content of Al₂O₃ by 1.5 is at most 75%, and at least one member selected from the group consisting of MgO, CaO, SrO and BaO is contained in a total content thereof being at least 16%.

### ADVANTAGEOUS EFFECTS OF INVENTION

For the tempered glass of the present invention, employed is glass to be treated, of which the glass transition point is from 500 to 600°C and the maximum value of the thermal expansion coefficient (αmax) between the glass transition point and the yield point is at least 430×10⁻⁷/°C. By employing such glass to be treated, it is possible to produce thin tempered glass by common air-quench tempering without requiring a special production facility.

### BRIEF DESCRIPTION OF DRAWINGS

Fig. 1 is a perspective view illustrating an example of a forming apparatus applicable to the production of tempered glass according to an embodiment.
Fig. 2 is a perspective view illustrating an example of an air-quench tempering device applicable to the production of tempered glass according to an embodiment.
Fig. 3 is a plan view showing disposition of cooling nozzles in Examples.

### DESCRIPTION OF EMBODIMENT

Now, an embodiment for the tempered glass of the present invention will be described.

The tempered glass in the embodiment is obtainable via a heating step and a cooling step. In the heating step, heat treatment is applied to glass to be treated, of which the glass transition point is from 500 to 600°C and the maximum value of the thermal expansion coefficient (αmax) between the glass transition point and the yield point is at least 430×10⁻⁷/°C. In the cooling step, air-quenching treatment is applied to the glass to be treated. Hereinafter, the maximum value of the thermal expansion coefficient (αmax) between the glass transition point and the yield point will be referred to simply as the high temperature thermal expansion coefficient (αmax).

For the tempered glass of the embodiment (i.e. tempered glass sheet, the same applies hereinafter), as glass to be treated by air-quench tempering (i.e. glass to be treated, the same applies hereinafter), one, of which the glass transition point is from 500 to 600°C and the high temperature thermal expansion coefficient (αmax) is at least 430×10⁻⁷/°C, is employed. By such glass to be treated, it is possible to effectively induce a residual stress by air-quenching treatment with a wind pressure of at most 30 kPa even if the thickness is at most 2.5 mm. Here, a wind pressure of at most 30 kPa is a wind pressure which can be attained by a common air-quench tempering device. That is, according to the tempered glass of the embodiment, it is possible to produce thin tempered glass having a thickness of at most 2.5 mm by means of a common air-quench tempering device.

If the glass transition point of glass to be treated exceeds 600°C, heating at a high temperature is required in the heating step, whereby peripheral members to hold the glass to be treated, etc. are exposed to the high temperature and their useful life is likely to be substantially shortened, and in order to prolong the useful life, it is required to use expensive materials excellent in heat resistance. On the other hand, if the glass transition point is less than 500°C, it tends to be difficult to bring about a temperature difference between the surface and the interior by the heating step and the cooling step, and it becomes difficult to effectively induce a residual stress. The glass transition point of glass to be treated is preferably from 510 to 590°C, more preferably from 520 to 580°C.

The yield point of glass to be treated is not necessarily limited but preferably exceeds 600°C. If the yield point is 600°C or lower, the heating temperature in the heating step, i.e. the starting temperature for tempering, tends to be low, and it is likely that a residual stress may not be effectively induced. The yield point is preferably at most 750°C. If the yield point exceeds 750°C, a high temperature is required in the heating step, and peripheral members to hold glass to be treated, etc. are exposed to the high temperature, whereby their useful life is likely to be substantially shortened. In order to prolong the useful life, it is necessary to use expensive members excellent in heat resistance. The yield point of glass to be treated is more preferably at most 700°C.

If the high temperature thermal expansion coefficient (αmax) is less than 430×10⁻⁷/°C, it is likely to be difficult to effectively induce a residual stress to thin glass to be treated having a thickness of at most 2.5 mm by air-quenching treatment with a wind pressure of at most 30 kPa. Usually, air-quench tempering is carried out by quenching from a temperature higher by about 100°C than the glass transition point. By adjusting the high temperature thermal expansion coefficient (αmax) to be at least 430×10⁻⁷/°C, it is possible to effectively induce a residual stress to thin glass to be treated having a thickness of at most 2.5 mm by air-quenching treatment with a wind pressure of at most 30 kPa from such a temperature.

Here, the high temperature thermal expansion coefficient (αmax) is meant for the maximum value of the thermal expansion coefficient between the glass transition point and the yield point in an expansion coefficient curve of glass to be treated, as measured by a thermal dilatometer as described later. The high temperature thermal expansion coefficient (αmax) should better be large with a view to inducing a residual stress, but should usually be sufficient at a level of 600×10⁻⁷/°C. Further, if the high temperature thermal expansion coefficient (αmax) becomes large, breakage of glass is likely to happen due to a temporary strain formed at the initial stage of the cooling step thus leading to a deterioration in the yield. Therefore, the high temperature thermal expansion coefficient (αmax) is preferably from 430×10⁻⁷/°C to 600×10⁻⁷/°C.

Further, the thermal expansion coefficient difference (Δα (= αmax - α)) between the high temperature thermal expansion coefficient (αmax) and the average linear expansion coefficient (α) at from 50 to 350°C, of glass to be treated, is preferably at least 345×10⁻⁷/°C. If the thermal expansion coefficients, i.e. the high temperature thermal expansion coefficient (αmax) and the average linear expansion coefficient (α), are simply increased, breakage due to a thermal shock, mismatch in thermal expansion with other members, non-conformity with the existent process, etc. are likely to occur in the heating step and the cooling step.

By adjusting the thermal expansion coefficient difference (Δα) to be at least 345×10⁻⁷/°C, i.e. by relatively increasing the high temperature thermal expansion coefficient (αmax) while maintaining the average linear expansion coefficient (α) to be constant, it is possible to effectively induce a residual stress to thin glass to be treated having a thickness of at most 2.5 mm by air-quenching treatment with a wind pressure of at most 30 kPa and at the same time, to prevent breakage due to a thermal shock, etc. The thermal expansion coefficient difference (Δα) is more preferably at least 360×10⁻⁷/°C, further preferably at least 370×10⁻⁷/°C. The thermal expansion coefficient difference (Δα) should better be large basically, but usually should be sufficient at a level of 500×10⁻⁷/°C.

The average linear expansion coefficient (α) should better be large with a view to inducing a residual stress, but if it is too large, expansion mismatch with existent other members may become problematic, or glass is likely to be weak against a thermal shock. Accordingly, the average linear expansion coefficient (α) is preferably from 80×10⁻⁷/°C. to 120×10⁻⁷/°C, further preferably from 85×10⁻⁷/°C to 110×10⁻⁷/°C.

Here, the glass transition point, yield point and thermal expansion coefficients (αmax, α) are measured as follows. That is, a cylindrical sample having a diameter of 5 mm and a length of 20 mm is prepared, and by means of a thermal dilatometer, the thermal expansion is measured at a temperature-raising rate of 5°C /min. under a load condition is 10 g, to obtain the glass transition point, yield point and thermal expansion coefficients (αmax, α).

The glass to be treated is preferably one which comprises, as represented by mol percentage based on oxides, from 55 to 75% of SiO₂, from 0 to 3% of Al₂O₃, from 0.1 to 25% of MgO, from 0.1 to 15% of CaO, from 0 to 10% of SrO, from 0 to 3% of BaO, from 8 to 20% of Na₂O, from 0 to 4% of K₂O, from 0.1 to 2% of Fe₂O₃ and from 0 to 5% of TiO₂, provided that the sum of the SiO₂ content and a value obtained by multiplying the content of Al₂O₃ by 1.5 is at most 75%, and at least one member selected from the group consisting of MgO, CaO, SrO and BaO is contained in a total content thereof being at least 16%. Hereinafter, a mol percentage based on oxides will be represented also simply as % or mol%.

According to such a composition, the productivity will be good since the fundamental constituting components are the same as the constituting components of soda lime glass to be commonly used for the production of tempered glass. Further, according to such a composition, it is possible to obtain one, of which the glass transition point is from 500 to 600°C and the high temperature thermal expansion coefficient (αmax) is at least 430×10⁻⁷/°C. Now, the compositional ranges of the respective components will be described.

The content of SiO₂ is from 55 to 75%. If it is less than 55%, troubles are likely to occur such that the density of glass becomes large, the thermal expansion coefficient becomes large, the abrasion resistance deteriorates, etc. The content of SiO₂ is preferably at least 57%, more preferably at least 60%. Further, if the content of SiO₂ exceeds 75%, the viscosity tends to be high, and the glass tends to be hard to melt. The content of SiO₂ is preferably at most 72%, more preferably at most 71 %, particularly preferably at most 70%.

Al₂O₃ may be contained as the case requires, and its content is at most 3%. If the content of Al₂O₃ exceeds 3%, it tends to be difficult to increase the thermal expansion coefficient at a temperature of the glass transition point or higher and thus is likely to be difficult to increase a residual stress. The content of Al₂O₃ is preferably at most 2.5%, more preferably at most 2%.

The content of MgO is at least 0.1 %. MgO is necessary to maintain the thermal expansion coefficient properly and is capable of improving the abrasion resistance. The content of MgO is preferably at least 2%, more preferably at least 3%. Further, the content of MgO is at most 25%. If the content of MgO exceeds 25%, the devitrification tendency of glass increases, whereby the productivity deteriorates. The content of MgO is preferably at most 23%, more preferably at most 21%, particularly preferably at most 20%.

The content of CaO is at least 0.1 %. CaO is necessary to maintain the thermal expansion coefficient properly. The content of CaO is preferably at least 2%, more preferably at least 3%. The content of CaO is at most 15%. If the content of CaO exceeds 15%, the devitrification tendency of glass increases, whereby the productivity deteriorates. The content of CaO is preferably at most 14%, more preferably at most 13%.

SrO may be contained as the case requires, and its content is at most 10%. By incorporating SrO, it is possible to adjust the thermal expansion coefficient and the melting properties at a high temperature of glass. If the content of SrO exceeds 10%, the density of glass increases, and the weight of glass increases. When SrO is incorporated, its content is preferably at least 1 %, more preferably at least 1.5%. The content of SrO is more preferably at most 7%, further preferably at most 5%.

BaO may be contained as the case requires, and its content is at most 3%. By incorporating BaO, it is possible to adjust the thermal expansion coefficient and the melting properties at a high temperature of glass. On the other hand, if BaO is contained, the density of glass increases, whereby the weight of glass tends to increase. Further, if BaO is contained, glass becomes brittle, whereby the crack initiation load tends to be low, and susceptibility to scratching increases. Therefore, the content of BaO is at most 3%, preferably at most 2%, more preferably at most 1%.

The content of Na₂O is at least 8%. Na₂O is a component to increase the thermal expansion coefficient even if the density of glass is low, and therefore, it is incorporated in a glass composition for the purpose of adjusting the thermal expansion coefficient. The content of Na₂O is preferably at least 9%, more preferably at least 10%. The content of Na₂O is at most 20%. If the content of Na₂O exceeds 20%, the temperature difference between the strain point and the yield point tends to decrease and accordingly, the tempering stress tends to decrease, and the thermal expansion coefficient tends to become too large. The content of Na₂O is preferably at most 17%, more preferably at most 15%.

K₂O may be contained as the case requires, and its content is preferably at least 0.1%. When the content of K₂O is at least 0.1%, it is possible to maintain the proper thermal expansion coefficient and the melting properties at a high temperature of glass. The content of K₂O is more preferably at least 0.5%, particularly preferably at least 1%. The content of K₂O is at most 4%. If the content of K₂O exceeds 4%, the density of glass increases, and the weight of glass increases. The content of K₂O is preferably at most 3.5%, more preferably at most 3%.

The content of Fe is at least 0.1 % as calculated as Fe₂O₃. Fe has an effect to increase the high temperature thermal expansion coefficient (αmax). Further, Fe is a component to absorb heat rays, whereby it has effects to promote thermal convection in molten glass thereby to improve the uniformity of glass, and to prevent bottom bricks of the melting furnace from becoming to have a high temperature thereby to prolong the useful life of the furnace, and thus, Fe is preferably contained in the composition in a melting process for sheet glass employing a large size furnace. It is preferably at least 0.2%, more preferably at least 0.3%, further preferably at least 0.5%. On the other hand, the content of Fe is preferably at most 2% as calculated as Fe₂O₃. If it exceeds 2%, due to coloration, it tends to be difficult to use such glass as glass for vehicles or buildings. It is more preferably at most 1%.

TiO₂ may be contained in a range not to exceed 5% in order to increase the high temperature thermal expansion coefficient (αmax). It is preferably at least 0.1%, more preferably at least 0.2%, further preferably at least 0.5%, particularly preferably at least 1 %. If it exceeds 5%, due to coloration, it tends to be difficult to use such glass as glass for vehicles or buildings. TiO₂ is preferably at most 4%, more preferably at most 3%.

The sum of the value of the content of SiO₂ and the value obtained by multiplying the content of Al₂O₃ by 1.5 (i.e. [content of SiO₂] + 1.5×[content of Al₂O₃]) is at most 75%. If the sum exceeds 75%, the high temperature thermal expansion coefficient may not be made to be at least 430×10⁻⁷/°C. The sum is more preferably at most 72%, particularly preferably at most 71 %. Further, the sum is preferably at least 55%, more preferably at least 57%.

The total of alkaline earth metal oxides (RO) comprising at least one member selected from the group consisting of MgO, CaO, SrO and BaO (hereinafter, the total of the contents of alkaline earth metal oxides (RO) may also be referred to simply as the total of MgO, CaO, SrO and BaO) is at least 16%. Here, MgO, CaO, SrO and BaO may not necessarily all be contained. If (MgO+CaO+SrO+BaO) representing the total content of RO is less than 16%, it is required to add alkali such as Li₂O, Na₂O, K₂O, etc. in a large amount in order to maintain the proper thermal expansion coefficient and the melting properties at a high temperature of glass, and consequently, the temperature difference between the strain point and the yield point is likely to be small, and the residual stress is likely to be small. The total of MgO, CaO, SrO and BaO is more preferably at least 16.5%, further preferably at least 18%. The total of MgO, CaO, SrO and BaO is preferably at most 30%. If it exceeds 30%, the devitrification tendency of glass increases, whereby the productivity deteriorates. The total of MgO, CaO, SrO and BaO is preferably at most 28%, more preferably at most 26%.

The glass to be treated is preferably composed substantially of the above described components, but may contain other components as the case requires and to a limit not contradictory to the concept of the present invention, in a total amount of such other components being up to 10%. As such other components, ZrO₂, Y₂O₃, CeO₂, MnO, CoO, etc. may be mentioned. Further, B₂O₃, PbO, Li₂O, etc. may be contained, but they are preferably not substantially contained.

For example, also with respect to a composition containing B₂O₃, it is possible to increase the high temperature thermal expansion coefficient (αmax) to a certain extent. However, B₂O₃ is preferably not substantially contained for such reasons that otherwise, a substantial cost is required for detoxification; when heated, the component is likely to be vaporized and the composition tends to be unstable; the raw material cost is high, etc.

Further, as a fining agent at the time of melting glass, SO₃, a chloride, a fluoride, a halogen, SnO₂, Sb₂O₃, As₂O₃ or the like may be contained as the case requires. Further, for adjustment of the color shade, Ni, Cr, V, Se, Au, Ag, Cd, etc. may be contained. The glass to be treated preferably does not substantially contain As, Sb and Pb. They are toxic and should better be not contained in glass to avoid their influence to the environment. Here, "does not substantially contain" means less than 0.01%.

According to the present invention, the thickness of the glass to be treated can be made to be at most 2.5 mm. By making the thickness to be at most 2.5 mm, it is possible to obtain weight-reduced tempered glass. Further, according to the tempered glass of the embodiment, even in a thickness of at most 2.5 mm, it is possible to effectively induce a residual stress by air-quenching treatment with a wind pressure of at most 30 kPa. The thickness of the glass to be treated is not particularly limited so long as it is at most 2.5 mm. However, from the viewpoint of weight reduction, at most 2.4 mm is preferred, and at most 2.3 mm is more preferred. Further, with a view to effectively inducing a residual stress, the thickness of the glass to be treated is preferably at least 1.3 mm. The thickness of the glass to be treated is more preferably at least 1.6 mm, further preferably at least 1.7 mm. Further, in the present invention, by applying tempering treatment in the same manner to glass to be treated having a thickness exceeding 2.5 mm, it is possible to obtain desired tempered glass.

The glass to be treated is produced by one of glass sheet-forming methods such as a float process, a fusion method, a down-draw method and a roll-out method. A float process is preferred, since it is thereby easy to produce a glass sheet with a large area and further it is thereby easy to minimize a thickness deviation.

In the heating step, heating treatment is applied to the above-described glass to be treated. The heated glass temperature is preferably from 640 to 690°C. If it exceeds 690°C, the glass tends to undergo viscous flow deformation, and the optical quality of a finally obtainable tempered glass is likely to deteriorate. On the other hand, if the heating temperature is less than 640°C, the stress relaxing effect in the interior during cooling will be less, whereby it is likely to be difficult to effectively induce a residual stress. Further, if the heating temperature is low, there will be such a problem that glass is likely to break at the initial stage of cooling. The heating temperature is more preferably from 650 to 680°C.

In the cooling step, air-quench treatment is applied. For example, cooling air with a wind pressure of at most 30 kPa is blown to both surfaces of heat-treated glass to be treated, for quenching thereby to obtain tempered glass. The wind pressure is preferably at most 27 kPa, more preferably at most 25 kPa. Even under such a wind pressure, a residual stress can be effectively induced according to the process for producing tempered glass of this embodiment. Further, with such a wind pressure, it is possible to employ a wider range of air-quench tempering devices. With a view to effectively inducing a residual stress, the wind pressure is preferably at least 15 kPa, more preferably at least 20 kPa. As the air-quench tempering device, it is possible to employ an air-quench tempering device which has been commonly used for air-quench tempering of this type. For example, an air-quench tempering device may be mentioned wherein glass to be treated is disposed so as to be sandwiched with a predetermined distance between the upper and lower blowing members for air-quench tempering, and quenched by cooling air.

As the tempered glass in an embodiment, preferred is, for example, one, of which the center residual stress is at least 49 MPa. Such one is preferred, since when it is subjected to a fracture test of tempered glass, the number of broken pieces would be at least 40 pieces in a square region of 50 mm × 50 mm. Such tempered glass is obtainable, for example, by adjusting the composition of the glass to be treated so as to bring the high temperature thermal expansion coefficient (αmax) to be at least 430×10⁻⁷/°C.

Further, with a view to suppressing devitrification to some extent thereby to improve the productivity, preferred as the tempered glass in an embodiment is, for example, one, of which the center residual stress is at least 49 MPa and less than 60 MPa. With such one, the number of broken pieces when fractured, would be at least 10 pieces and less than 40 pieces, and besides, devitrification may be suppressed to some extent thereby to improve the productivity.

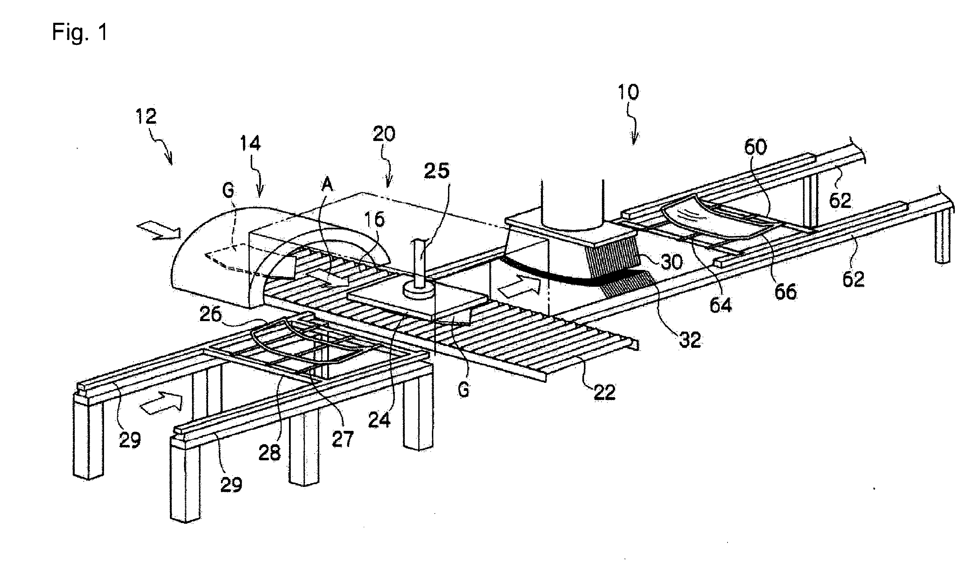

Fig. 1 is a perspective view illustrating an example of the entire structure of a glass sheet-forming apparatus including an air-quench tempering device applicable to the production of tempered glass according to an embodiment. This glass sheet-forming apparatus is a bending forming apparatus for rear glass for automobiles.

The glass sheet-forming apparatus 12 is an in-furnace bending forming apparatus whereby a glass sheet G as the glass to be treated is subjected to bending and forming inside of a heating section 14, but may be applied also to an out-furnace bending forming apparatus whereby the glass sheet G is subjected to bending and forming outside of the heating section 14. Here, the glass sheet G to be subjected to bending and forming is not limited to rear glass for automobiles and may be front glass or side glass, and it is not limited to one for automobiles.

In the heating section 14, a roller conveyor 16 is disposed. While being transported in the direction of arrow A in the Fig. in the heating section 14 by the roller conveyor 16, the glass sheet G to be subjected to bending and forming is heated to a predetermined bending forming temperature in the process of being transported in the heating section 14. At the outlet of the heating section 14, a forming furnace 20 is provided, and the interior of the forming furnace 20 is in communication with the heating section 14 and is maintained in a high temperature state. The glass sheet G heated to the bending forming temperature in the heating section 14 is transported into the forming furnace 20 by the roller conveyor 22. The heating step in the process for producing tempered glass in an embodiment, is carried out, for example, by means of such heating section 14 and forming furnace 20.

In the forming furnace 20, a forming die 24 is provided. This forming die 24 is provided in the forming furnace 20, as hung by four hanging rods (not shown) from the ceiling side of the forming furnace 20. On the lower surface of this forming die 14, a forming surface is formed in a shape substantially corresponding to the bending shape of the glass sheet G to be formed.

Further, the forming die 24 is moved up and down in a vertical direction by a lifting and lowering device not shown. Further, at an upper portion of the forming die 24, a suction pipe 25 is connected. This suction pipe 25 is connected to a suction device (not shown). Here, this forming die 24 has many vacuum holes (not shown) formed on its forming surface, and as air is aspirated from such vacuum holes, the glass sheet G is adsorbed and held at the forming surface.

Further, at a lower position of the forming die 24, lift jets (not shown) are provided below the roller conveyor 22. Such lift jets eject hot air towards the glass sheet G transported by the roller conveyor 22 to its upper position. The glass sheet G receive this hot air and is lifted from the upper side of the roller conveyor 22, and this lifted glass sheet G is suctioned and adsorbed by the forming surface of the forming die 24 and pressed by a bending ring 26 and bent and formed in a predetermined curved shape.

This bending ring 26 has a peripheral shape substantially corresponding to the bending shape of the curved glass sheet G to be formed and is provided on a bending ring-support frame 27. The bending ring-support frame 27 is provided on a bending shuttle 28, and the bending shuttle 28 is driven by a driving mechanism (not shown) for reciprocation on a rail 29. And, by the reciprocation of this bending shuttle 28, the bending ring 26 is reciprocated between a forming position in the forming furnace 20 and a waiting position outside the forming furnace.

On the other hand, the air-quench tempering device 10 is provided with a quench shuttle 60. The quench shuttle 60 is provided at a position on the opposite side of the bending shuttle 28 with the forming furnace 20 interposed therebetween, and is driven by a driving mechanism (not shown) for reciprocation on a rail 62. On this quench shuttle 60, a quench ring 66 is provided via a quench ring-support frame 64.

The quench ring 66 is one to receive the glass sheet G bent and formed in the forming furnace 20 and has a peripheral shape of a glass sheet substantially corresponding to the bending shape of the curved glass sheet to be formed. By the reciprocation of the quench shuttle 60, this quench ring 66 is reciprocated between a receiving position in the forming furnace 20 and an air-quench tempering position outside the forming furnace. That is, when the bending ring 26 returns to the waiting position on one side, a side door on the opposite side of the forming furnace opens, and the quench shuttle 60 is moved from outside of the furnace to below the forming die 24. And, by releasing adsorption of the glass sheet G by the forming die 24, the glass sheet G formed by the forming die 24 is transferred to the quench ring 66, and this glass sheet G is transported by the quench shuttle 60 to the air-quench tempering device 10. Further, the glass sheet G tempered by air-quenching in the air-quench tempering device 10 is transported by the quench shuttle 60 to the next step.

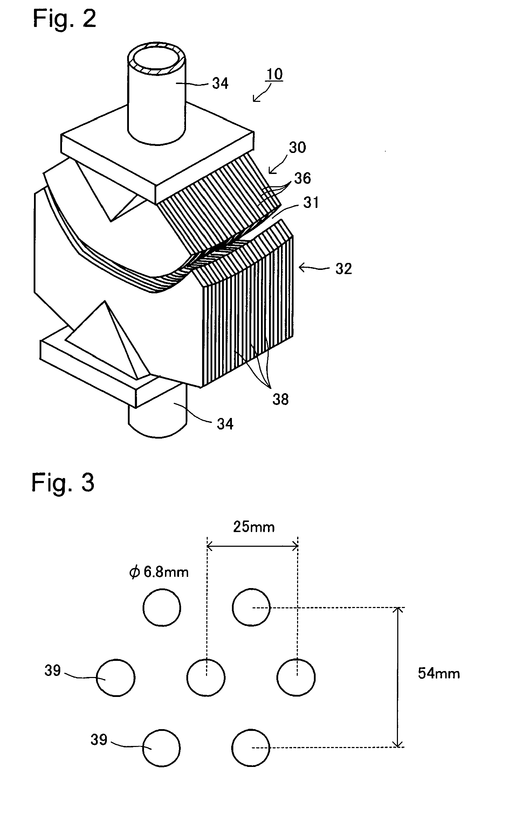

The glass sheet G having bending and forming completed, is transported by the quench ring 66 to the air-quench tempering device 10. This air-quench tempering device 10 is provided with an upper blowing member 30 above and a lower blowing member 32 below with an air-quench tempering area interposed as shown in Fig. 2. In Fig. 2, the glass sheet G to be interposed at a predetermined distance between the upper blowing member 30 and the lower blowing member 32, is omitted.

To the upper blowing member 30 and the lower blowing member 32, ducts 34 are, respectively, connected, and to these ducts 34, blowers not shown are connected. Thus, when blowers are driven, air generated by the blowers is supplied via the ducts 34 to the upper blowing member 30 and the lower blowing member 32. And, the air is blown out towards the air-quench tempering area 31 shown in Fig. 2 from many cooling nozzles formed at the forward end surface (the lower surface in Fig. 2) of a plurality of blade members (i.e. nozzle chambers) 36, 36 ··· constituting the upper blowing member 30 as shown in Fig. 2 and from many cooling nozzles (not shown) formed at the forward end surface (the upper surface in Fig. 2) of a plurality of blade members (nozzle chambers) 38, 38 ··· constituting the lower blowing member 32.

Thus, the glass sheet G supported by the quench ring 66 is cooled and air-quench tempered at its both surfaces. The cooling step in the process for producing tempered glass in an embodiment, is carried out, for example, by such an air-quench tempering device 10. According to the process for producing tempered glass in the embodiment, the wind pressure during air blowing is low at a level of at most 30 kPa, and therefore, it is possible to employ a common air-quench tempering device.

The glass sheet G air-quench tempered by the air-quench tempering device 10 is transported to an inspection step not shown, by movement of the quench shuttle 60. Here, the glass sheet G is inspected for a defect such as cracks, and one having no defect detected is transported to a good product step and one having a defect detected is transported to a defective product step.

### EXAMPLES

Now, the present invention will be described in further detail with reference to Examples. However, it should be understood that the present invention is by no means limited to these Examples.

Commonly employed raw materials such as oxides, etc. are suitably selected to form a glass composition as shown in Table 1 and weighed and mixed to be 300 g as glass. Thereafter, the mixture was put in a platinum crucible and melted, defoamed and homogenized for 3 hours in a resistance heating electric furnace at 1600°C, and then, it was cast in a mold and held for at least 1 hour at a temperature higher by about 30°C than the glass transition temperature and thereafter annealed to room temperature at a cooling rate of 1°C /min, to obtain a sheet-form glass to be treated in each of Ex. 1 to 8. Here, Ex. 1 to 6 are Examples of the present invention, and Ex. 7 and 8 are Comparative Examples of the present invention.

And, based on the standards of JIS R3103-3, 200I, a cylindrical sample having a diameter of 5 mm and a length of 20 mm was prepared from the glass to be treated, and by means of a thermal expansion meter (TMA4000SA, manufactured by Bruker AXS), the thermal expansion was measured at a temperature raising rate of 5°C /min. under a load of 10 g, and the glass transition point was obtained. Further, from the same measured data, the yield point was obtained.

Further, based on the standards of JIS R1618, 2002, with respect to the glass to be treated, in the same manner as in the measurement of the glass transition point by means of a thermal expansion meter (TMA4000SA, manufactured by Bruker AXS), the thermal expansion was measured at a temperature raising rate of 5°C /min., and the average linear expansion coefficient (α) at from 50 to 350°C and the maximum value of the thermal expansion coefficient (αmax) between the glass transition point and the yield point, were obtained.

Further, with respect to the glass to be treated in each of Ex. 1 to 8, in order to evaluate easiness for air-quench tempering, the residual stress formed by heating and cooling was obtained by the measuring method as described below.

Firstly, a sheet-form glass to be treated having a size of 100 mm × 100 mm and a thickness of 2.3 mm was prepared. Thereafter, the glass to be treated was heated and then taken out from the furnace, and when it reached the starting temperature for tempering as shown in Table 1, the cooling wind was blown to its both surfaces by cooling nozzles for quenching to obtain tempered glass.

Here, the heating temperature (starting temperature for tempering) was set at a temperature where the viscosity η of each glass to be treated became to be from 10^{9.3} dPa to 10^{9.5}dPa. Further, as shown in Fig. 3, the configuration of cooling nozzle was disposed stepwise; the diameter of each individual cooling nozzle was 6.8 mm; the distance between the centers of cooling nozzles in the horizontal direction was set to be 25 mm; and the distance of the centers of cooling nozzles in the vertical direction (the distance between the centers of cooling nozzles located at the same position in the horizontal direction) was set to be 54 mm. The distance between the forward ends of cooling nozzles and the surface of the glass to be treated was set to be 30 mm; the temperature of air was set to be 20°C; and the wind pressure (blowing wind pressure) was set to be 25 kPa. The center residual stress of tempered glass thus produced was measured from the cross-sectional direction of the tempered glass by a birefringence imaging method.

Further, when the produced tempered glass was fractured, the number of broken pieces was counted. The fracturing was conducted in accordance with the method disclosed by Akeyoshi, et al., Rept. Res. Lab., Asahi Glass Co., Ltd., 17, 23 (1967).

In Table 1, the glass composition, the tempering conditions and the physical property values of glass to be treated and tempered glass are summarized.

**[Table 1]**

| | Examples | | | | | | Comparative Examples | |
|---|---|---|---|---|---|---|---|---|
| mol% | Ex.1 | Ex.2 | Ex.3 | Ex.4 | Ex.5 | Ex.6 | Ex.7 | Ex.8 |
| SiO₂ | 60.9 | 63.9 | 63.1 | 64.5 | 67.5 | 67.2 | 69.32 | 70.60 |
| Al₂O₃ | 0.1 | 0.1 | 0.9 | 0.3 | 2.0 | 2.0 | 1.21 | 1.50 |
| MgO | 19.0 | 19.0 | 4.4 | 8.8 | 8.1 | 7.4 | 10.79 | 3.00 |
| CaO | 6.6 | 3.6 | 13.0 | 13.0 | 8.3 | 8.3 | 4.60 | 13.20 |
| SrO | 0.0 | 0.0 | 2.3 | 2.3 | 0.0 | 0.0 | 0.00 | 0.00 |
| BaO | 0.0 | 0.0 | 0.0 | 0.0 | 0.0 | 1.2 | 0.00 | 0.40 |
| Na₂O | 13.0 | 13.0 | 16.3 | 8.6 | 13.3 | 12.0 | 13.86 | 8.70 |
| K₂O | 0.2 | 0.2 | 0.0 | 2.5 | 0.4 | 0.4 | 0.22 | 2.60 |
| Fe₂O₃ | 0.200 | 0.200 | 0.100 | 0.100 | 0.371 | 0.559 | 0.100 | 0.100 |
| TiO₂ | 0.000 | 0.000 | 0.000 | 0.000 | 0.000 | 1.000 | 0.000 | 0.000 |
| SiO₂+1.5 Al₂O₃ | 61.1 | 64.1 | 64.5 | 65.0 | 70.5 | 70.2 | 71.1 | 72.9 |
| RO | 25.6 | 22.6 | 19.7 | 24.1 | 16.4 | 16.8 | 15.4 | 16.6 |
| R₂O | 13.2 | 13.2 | 16.3 | 11.1 | 13.7 | 12.4 | 14.1 | 11.3 |
| Tg (°C) | 566.3 | 565.2 | 537.4 | 565.5 | 559.5 | 571.0 | 544.9 | 571.2 |
| Ts (°C) | 630.9 | 630.9 | 606.4 | 644.0 | 638.0 | 656.5 | 620.3 | 647.9 |
| α(×10⁻⁷/°C) | 96.1 | 92.1 | 111.2 | 96.4 | 93.0 | 88.6 | 91.9 | 90.9 |
| 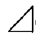 Δα(×10⁻⁷/°C) | 439.6 | 401.5 | 350.2 | 346.6 | 350.9 | 386.5 | 314.2 | 269.7 |
| αmax (×10⁻⁷/°C) | 535.7 | 493.6 | 461.4 | 443.0 | 444.0 | 475.1 | 406.1 | 360.7 |
| Tempering conditions | | | | | | | | |
| Starting temperature for tempering (°C) | 660.0 | 660.0 | 645.0 | 675.0 | 670.0 | 680.0 | 650.0 | 680.0 |
| Blowing wind pressure (kPa) | 25.0 | 25.0 | 25.0 | 25.0 | 25.0 | 25.0 | 25.0 | 25.0 |
| Physical property values of tempered glass | | | | | | | | |
| Sheet thickness (mm) | 2.3 | 2.3 | 2.3 | 2.3 | 2.3 | 2.3 | 2.3 | 2.3 |
| Surface stress (MPa) | 130.41 | 124.49 | 123.30 | 105.06 | 125.70 | 122.66 | 115.08 | 109.02 |
| Center stress (MPa) | 56.41 | 54.16 | 51.45 | 49.47 | 50.67 | 55.31 | 45.91 | 46.71 |
| Number of broken pieces (in 5 cm × 5 cm) | 45 | 36.3 | 25.9 | 18.3 | 22.9 | 40.8 | 4.6 | 7.7 |

According to the glass to be treated in each of Examples 1 to 6, it is evident that a high temperature thermal expansion coefficient (αmax) of at least 430×10⁻⁷/°C is obtainable in each case. Further, according to the glass to be treated in each of Examples 1 to 6, it is evident that it is possible to obtain tempered glass, of which the center residual stress is larger than 49 MPa and the number of broken pieces is large. Especially, according to the glass to be treated in Ex. 1, it is evident that the high temperature thermal expansion coefficient (αmax) becomes to be at least 530×10⁻⁷/°C? and it is possible to obtain tempered glass, of which the center residual stress is at least 55 MPa and the number of broken pieces is at least 40 pieces.

### INDUSTRIAL APPLICABILITY

According to the tempered glass of the present invention, by using glass to be treated, of which the glass transition point is from 500 to 600°C and the maximum value of the thermal expansion coefficient (αmax) between the glass transition point and the yield point is at least 430×10⁻⁷/°C, it is possible to produce tempered glass having a sheet thickness of at most 2.5 mm by common air-quench tempering without requiring a special facility, and such thin tempered glass is useful for transportation equipment and architecture.

The entire disclosure of Japanese Patent Application No. 2012-185685 filed on August 24, 2012 including specification, claims, drawings and summary is incorporated herein by reference in its entirety.

### REFERENCE SYMBOLS

G: glass sheet (glass sheet to be treated), 10: air-quench tempering device, 12: glass sheet-forming device, 14: heating section, 16: roller conveyor, 18: heating furnace, 20: forming furnace, 22: roller conveyor, 24: forming die, 25: suction pipe, 26: bending ring, 27: bending ring-support frame, 28: bending shuttle, 29: rail, 30: upper blowing member, 31: air-quench tempering area, 32: lower blowing member, 34: duct, 36: blade member, 38: blade member, 39: cooling nozzle, 60: quench shuttle, 62: rail, 64: quench ring-support frame, 66: quench ring.

## Claims

1. Tempered glass obtainable via a heating step of applying heat treatment to glass to be treated, of which the glass transition point is from 500 to 600°C and the maximum value of the thermal expansion coefficient (αmax) between the glass transition point and the yield point is at least 430×10⁻⁷/°C, and a cooling step of applying air-quenching treatment to the glass to be treated.

2. The tempered glass according to Claim 1, wherein the glass to be treated contains at least 0.1 % of Fe₂O₃ as represented by mol percentage based on oxide.

3. The tempered glass according to Claim 1 or 2, wherein the glass to be treated contains at least 0.1 % and at most 2% of Fe₂O₃ as represented by mol percentage based on oxide.

4. The tempered glass according to Claim 1, wherein the glass to be treated contains at least 0.1 % of TiO₂ as represented by mol percentage based on oxide.

5. The tempered glass according to Claim 1 or 4, wherein the glass to be treated contains at least 0.1 % and at most 5% of TiO₂ as represented by mol percentage based on oxide.

6. The tempered glass according to Claim 1, wherein the glass to be treated comprises, as represented by mol percentage based on oxides, from 55 to 75% of SiO₂, from 0 to 3% of Al₂O₃, from 0.1 to 25% of MgO, from 0.1 to 15% of CaO, from 0 to 10% of SrO, from 0 to 3% of BaO, from 8 to 20% of Na₂O, from 0 to 4% of K₂O, from 0.1 to 2% of Fe₂O₃ and from 0 to 5% of TiO₂, provided that the sum of the SiO₂ content and a value obtained by multiplying the content of Al₂O₃ by 1.5 is at most 75%, and at least one member selected from the group consisting of MgO, CaO, SrO and BaO is contained in a total content thereof being at least 16%.

7. The tempered glass according to any one of Claims 1 to 6, wherein the glass to be treated is such that the thermal expansion coefficient difference (Δα) between the maximum value of the thermal expansion coefficient (αmax) between the glass transition point and the yield point, and the average linear expansion coefficient (α) at from 50 to 350°C is at least 345×10⁻⁷/°C.

8. The tempered glass according to any one of Claims 1 to 7, which has a thickness of at most 2.5 mm.

9. The tempered glass according to any one of Claims 1 to 8, wherein the total content of MgO, CaO, SrO and BaO is at least 18%.

10. The tempered glass according to any one of Claims 1 to 9, wherein the center residual stress is at least 49 MPa.

11. Glass to be treated for tempered glass, which comprises, as represented by mol percentage based on oxides, from 55 to 75% of SiO₂, from 0 to 3% of Al₂O₃, from 0.1 to 25% of MgO, from 0.1 to 15% of CaO, from 0 to 10% of SrO, from 0 to 3% of BaO, from 8 to 20% of Na₂O,from 0 to 4% of K₂O, from 0.1 to 2% of Fe₂O₃ and from 0 to 5% of TiO₂, provided that the sum of the SiO₂ content and a value obtained by multiplying the content of Al₂O₃ by 1.5 is at most 75%, and at least one member selected from the group consisting of MgO, CaO, SrO and BaO is contained in a total content thereof being at least 16%.

12. The glass to be treated according to Claim 11, wherein the thermal expansion coefficient difference (Δα) between the maximum value of the thermal expansion coefficient (αmax) between the glass transition point and the yield point, and the average linear expansion coefficient (α) at from 50 to 350°C is at least 345×10⁻⁷/°C.
